# EUROPEAN PATENT SPECIFICATION

(11) **EP 3 113 001 B1**
(45) Date of publication and mention of the grant of the patent: **07.10.2020**
(21) Application number: 16169057.3
(22) Date of filing: 10.05.2016
(51) Int. Cl.: G06F 3/0481, G06F 3/0488, G06F 1/3234, H04L 12/58

(54) **METHOD AND APPARATUS FOR DISPLAYING INFORMATION**
VERFAHREN UND VORRICHTUNG ZUR ANZEIGE VON INFORMATIONEN
PROCÉDÉ ET APPAREIL POUR L'AFFICHAGE D'INFORMATIONS

(30) Priority: 29.06.2015 CN 201510369864
(43) Date of publication of application: 04.01.2017
(73) Proprietor: Xiaomi Inc., Beijing 100085 (CN)
(72) Inventor: ZHU, Yifan, Beijing 100085 (CN); YANG, Wankun, Beijing 100085 (CN); CHEN, Yinli, Beijing 100085 (CN)
(74) Representative: Cabinet Beau de Loménie

(56) References cited:
- US-A1- 2010 033 498
- US-A1- 2011 256 848
- US-A1- 2014 141 841
- Droid Life: "Nexus 6 Feature: Ambient Display", YouTube, 3 November 2014 (2014-11-03), pages 1-3, XP054976854, Retrieved from the Internet: URL:https://www.youtube.com/watch?v=5TyhaO jME5g [retrieved on 2016-10-21]
- Alexander Donst: "Ambient Display", YouTube, 24 November 2014 (2014-11-24), pages 1-2, XP054976855, Retrieved from the Internet: URL:https://www.youtube.com/watch?v=T6AB88 jNJUE [retrieved on 2016-10-21]
- Paul K.: "How to turn off some of the pixels on your Samsung Galaxy's display and save battery - PhoneArena", , 9 April 2015 (2015-04-09), XP055630528, Retrieved from the Internet: URL:https://www.phonearena.com/news/How-to -turn-off-some-of-the-pixels-on-your-Samsu ng-Galaxys-display-and-save-battery_id6810 3 [retrieved on 2019-10-09]
- Michael Crider: "Pixel OFF Turns Some Screen Pixels Black To Save Battery Power On Devices With AMOLED Screens", , 6 April 2015 (2015-04-06), XP055630438, Retrieved from the Internet: URL:https://www.androidpolice.com/2015/04/ 06/pixel-off-turns-some-screen-pixels-blac k-to-save-battery-power-on-devices-with-am oled-screens/ [retrieved on 2019-10-09]

## Description

### TECHNICAL FIELD

The present invention generally relates to fields of communication technology, and more particularly, to a method and an apparatus for displaying information.

### BACKGROUND

With development of terminal technology, there are more and more novel functions developed in smart terminals in order to satisfy a variety of user needs. An interface of a terminal system, with which a user is interacted most frequently, is a display interface of the terminal in a screen-locked state. When there are notification messages to be presented on a display screen of the terminal in the screen-off state, the display screen may be switched from the screen-off state into a screen-on state, and then configured to present not only the notification messages mentioned above, but also contents including information on weather, date, terminal status.

Document Droid Life: "Nexus 6 Feature: Ambient Display", YouTube, 3 November 2014, page 1-3, XP054976854, URL: https://www.youtube.com/watch?v=5TyhaOjME5g is a video which shows a device performing a feature called "Ambient display". This feature consists in displaying information on a screen by lighting up selected pixels.

Document Alexander Donst: "Ambient Display", YouTube, 24 November 2014 (2014-11-24), pages 1-2, XP054976855, URL:https://www.youtube.com/watch?v=T6AB88jNJUE is a video which shows another example of a device performing a feature similar to the Ambient Display of the previously discussed document.

Document US2011256848 A1 shows a transparent darkening cover layer with notification messages arranged in the cover layer displayed on top of the background application execution screen, after switching from a screen off state.

### SUMMARY

The invention is defined by the independent claims. There is provided a method and apparatus for displaying information according to independent claims 1 and 3 respectively, a computer program according to independent claim 5 and a recording medium readable by a computer according to independent claim 6. Further aspects of the invention are outlined in the dependent claims.

Should there be any disclosed embodiments which do not fall within the scope of the claims they do not form part of the present invention. In such cases the term embodiment is to be understood as referring to examples useful for understanding the present invention.

According to a first aspect of the embodiments of the present invention, there is provided a method for displaying information. The method includes:
receiving a notification message to be presented when a display screen is in a screen-off state; and
performing a darkening process for an object to be hidden on the display screen and displaying the notification message, when the display screen is switched into a screen-on state from the screen-off state; wherein the object to be hidden includes a whole or a part of remaining display content displayed on the display screen except the notification message.

In an example, performing a darkening process for an object to be hidden on the display screen and displaying the notification message includes:
displaying a preset darkening image superposed on an upper layer over an original locked screen displayed on the display screen, such that the object to be hidden is darkened; wherein the original locked screen is a display interface preset for the display screen being switched into the screen-on state from the screen-off state, the darkening image is configured to cover the original locked screen entirely or configured to cover the object to be hidden, and the darkening image has a transparency lower than a preset threshold; and
displaying the notification message superposed on an upper layer over the darkening image if the darkening image is configured to cover the original locked screen entirely, or displaying the notification message on the display screen if the darkening image is configured to cover the object to be hidden.

In an example, the method further includes:
detecting whether there is presence of a touch event in a preset detection region of the display screen, wherein the detection region is an arbitrary region of the display screen; and
controlling the display screen to stop displaying the darkening image if presence of the touch event is detected in the detection region, such that the object to be hidden is displayed.

According to the invention, performing a darkening process for an object to be hidden on the display screen and displaying the notification message, when the display screen is switched into a screen-on state from the screen-off state, includes:
enabling a first group of pixels of the display screen to be in a power-on state, such that the notification message is displayed, the first group of pixels corresponding to a display region for the notification message; and
disabling a second group of pixels of the display screen to be in a power-off state, such that the object to be hidden is darkened, the second group of pixels corresponding to a display region for the object to be hidden.

Alternatively, the method further includes:
detecting whether there is presence of a touch event in a preset detection region of the display screen, wherein the detection region is an arbitrary region of the display screen; and
enabling the second group of pixels to be switched into the power-on state from the power-off state if presence of the touch event is detected in the detection region, such that the object to be hidden is displayed.

Alternatively, displaying the notification message on the display screen includes:
determining a respective presentation form for respective notification message according to a priority of the respective notification message, if a plurality of notification messages are received, wherein notification messages having different priorities correspond to different presentation forms or to a same presentation form, and the presentation form includes any one or more of a presented order, a luminance value, a font type, a font size and a color value; and
presenting the notification messages on the display screen according to the respective presentation form of the respective notification message.

According to a second aspect of the embodiments of the present invention, there is provided an apparatus for displaying information, including:
a receiving module configured to receive a notification message to be presented when a display screen is in a screen-off state; and
a display module configured to perform a darkening process for an object to be hidden on the display screen and to display the notification message, when the display screen is switched into a screen-on state from the screen-off state; wherein the object to be hidden includes a whole or a part of remaining display content displayed on the display screen except the notification message.

In an example, the display module includes:
a first display submodule configured to display a preset darkening image superposed on an upper layer over an original locked screen displayed on the display screen, such that the object to be hidden is darkened; wherein the original locked screen is a display interface preset for the display screen being switched into the screen-on state from the screen-off state, the darkening image is configured to cover the original locked screen entirely or configured to cover the object to be hidden, and the darkening image has a transparency lower than a preset threshold; and
a second display submodule configured to display the notification message superposed on an upper layer over the darkening image if the darkening image is configured to cover the original locked screen entirely, or
the second display submodule is configured to display the notification message on the display screen if the darkening image is configured to cover the object to be hidden.

In an example, the display module further includes:
a first detection submodule configured to detect whether there is presence of a touch event in a preset detection region of the display screen, wherein the detection region is an arbitrary region of the display screen; and
a first control submodule configured to control the display screen to stop displaying the darkening image if presence of the touch event is detected in the detection region, such that the original locked screen is displayed.

According to the invention, the display module includes:
a second control submodule configured to enable a first group of pixels of the display screen to be in a power-on state, such that the notification message is displayed, the first group of pixels corresponding to a display region for the notification message; and
a third control submodule configured to disable a whole or a part of a second group of pixels of the display screen to be in a power-off state, such that the object to be hidden is darkened, the second group of pixels corresponding to a display region for the object to be hidden.

Alternatively, the display module further includes:
a second detection submodule configured to detect whether there is presence of a touch event in a preset detection region of the display screen, wherein the detection region is an arbitrary region of the display screen; and
a fourth control submodule configured to enable the second group of pixels to be switched into the power-on state from the power-off state if presence of the touch event is detected in the detection region, such that the object to be hidden is displayed.

Alternatively, the display module includes:
a determination submodule configured to determine a respective presentation form for respective notification message according to a priority of the respective notification message, if a plurality of notification messages are received, wherein notification messages having different priorities correspond to different presentation forms or to a same presentation form, and the presentation form includes any one or more of a presented order, a luminance value, a font type, a font size and a color value; and
a presentation submodule configured to present the notification messages on the display screen according to the respective presentation form of the respective notification message.

According to a third aspect of the embodiments of the present invention, there is provided a device for displaying information, including:
a processor; and
a memory for storing instructions executable by the processor;
wherein the processor is configured to:
   receive a notification message to be presented when a display screen is in a screen-off state; and
   perform a darkening process for an object to be hidden on the display screen and display the notification message, when the display screen is switched into a screen-on state from the screen-off state; wherein the object to be hidden includes a whole or a part of remaining display content displayed on the display screen except the notification message.
inventionIn one particular embodiment, the steps of the method for displaying information are determined by computer program instructions.

Consequently, according to a fourth aspect, the invention is also directed to a computer program for executing the steps of a method for displaying information.as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical scheme according to embodiments of the present invention may have following beneficial effects.

According to the present invention, when the notification message to be displayed is received in the screen-off state of the display screen, the display screen is switched into the screen-on state to display the notification message, while the whole or part of remaining display content displayed on the display screen except the notification message is darkened. Accordingly, the object to be hidden can be darkened on the display screen while presentation of the notification message can be highlighted, such that presented content on the display screen is concise and easy to be read, facilitating a user to focus on the notification message quickly. Thus, better presentation effect of the display screen can be achieved and user experience can be improved.

According to the present invention, the darkening image is configured to cover the original locked screen entirely or to cover the object to be hidden, and has a transparency lower than the preset threshold. Accordingly, the object to be hidden can be occluded by the darkening image, such that the object to be hidden can be darkened and highlighted presentation of the notification message can be achieved efficiently. Thus, presented content on the display screen is concise and easy to be read, facilitating a user viewing the display screen to focus on the notification message quickly, such that user experience can be improved.

According to the present invention, if there is presence of a touch event in the detection region preset on the display screen, the display screen is controlled to stop displaying the darkening image, such that the object to be hidden can be displayed. Accordingly, the object to be hidden is no longer in a darkened state, such that other display content can be displayed on the display screen for a user to quickly view some frequently-used information thereon, thus user experience can be improved.

According to the present invention, among pixels of the display screen, ones corresponding to the display region for the notification message are enabled to be in the power-on state while other ones corresponding to the display region for the object to be hidden are disabled to be in the power-off state, so as to display the notification message. Accordingly, the notification message can be presented in a highlighted way on the display screen, such that presented content on the display screen is concise and easy to be read, facilitating the user to focus on the notification message quickly, and better presentation effect of the display screen can be achieved. Moreover, power consumption of the terminal can be also reduced since only the first group of pixels is enabled to be in the power-on state while the second group of pixels is disabled to be in the power-off state.

According to the present invention, if there is presence of a touch event in the detection region preset on the display screen, the second group of pixels in the power-off state is enabled to be in the power-on state so as to display the object to be hidden. Accordingly, the object to be hidden is no longer in a darkened state, such that other display content can be displayed on the display screen for a user to quickly view some frequently-used information thereon, thus user experience can be improved.

According to the present invention, a presentation form is determined for respective notification message according to the priority thereof, where notification messages having different priorities may correspond to different presentation forms or to a same presentation form, thus the notification messages can be displayed with any one or more presentation forms of a presented order, a luminance value, a font type, a font size and a color value. Accordingly, the notification messages can be displayed with diversity of forms, thus user experience can be improved.

It is to be understood that both the foregoing general description and the following detailed description are exemplary and explanatory only and are not restrictive of the present invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
Fig. 1A is a flow chart illustrating a method for displaying information according to an exemplary embodiment of the present invention.
Fig 1B is a schematic diagram illustrating a screen-off state of a terminal according to an exemplary embodiment of the present invention.
Fig. 1C is a schematic diagram illustrating display of a notification message on a display screen of a terminal according to an exemplary embodiment of the present invention.
Fig. 1D is a schematic diagram illustrating display of a notification message on a display screen of another terminal according to an exemplary embodiment of the present invention.
Fig. 1E is a schematic diagram illustrating display of a notification message on another terminal display screen according to an exemplary embodiment of the present invention.
Fig. 2A is a flow chart illustrating another method for displaying information according to an exemplary embodiment of the present invention.
Fig. 2B is a schematic diagram illustrating display of an original locked screen on a display screen according to an exemplary embodiment of the present invention.
Fig. 2C is a schematic diagram illustrating a darkening image according to an exemplary embodiment of the present invention.
Fig. 2D is a schematic diagram illustrating a notification message according to an exemplary embodiment of the present invention.
Fig. 2E is a schematic diagram illustrating laminated display of a notification message, a darkening image and an original locked screen according to an exemplary embodiment of the present invention.
Fig. 2F is a schematic diagram illustrating display of a notification message on a display screen according to an exemplary embodiment of the present invention.
Fig. 3A is a flow chart illustrating another method for displaying information according to an exemplary embodiment of the present invention.
Fig. 3B is a schematic diagram illustrating an OLED display screen with partial enlarged detail according to an exemplary embodiment of the present invention.
Fig. 3C is a schematic diagram illustrating a first group of pixels being enabled in a power-on state according to an exemplary embodiment of the present invention.
Fig. 3D is a schematic diagram illustrating display of a notification message on another display screen according to an exemplary embodiment of the present invention.
Fig. 4 is a block diagram illustrating an apparatus for displaying information according to an exemplary embodiment of the present invention.
Fig. 5 is a block diagram illustrating another apparatus for displaying information according to an exemplary embodiment of the present invention.
Fig. 6 is a block diagram illustrating another apparatus for displaying information according to an exemplary embodiment of the present invention.
Fig. 7 is a block diagram illustrating another apparatus for displaying information according to an exemplary embodiment of the present invention.
Fig. 8 is a block diagram illustrating another apparatus for displaying information according to an exemplary embodiment of the present invention.
Fig. 9 is a block diagram illustrating another apparatus for displaying information according to an exemplary embodiment of the present invention.
Fig. 10 is a block diagram illustrating a device for displaying information according to an exemplary embodiment of the present invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatuses and methods consistent with aspects related to the present invention as recited in the appended claims.

Terms in the present invention are used merely for purpose of description of particular embodiments instead of limitation on the present invention. Singulative terms such as "a/an", "said" and "the" used in the present invention and appended claims are intended to include plural meanings thereof, unless other meanings are explicitly indicated in context. It should be also noted that, term "and/or" used herein refers to and includes any or all possible combination of one or more associated items as listed.

It should be noted that, although terms like "first" "second" and "third" may be used in the present invention to describe variety of messages, those messages should not be limited thereto. Those terms are used merely for distinguishing messages of a same type from each other. For example, a first message may be also referred to as a second message without departing from scope of the present invention. Similarly, the second message may be also referred to as the first message. The word "if" used herein may be understood as "at the time of" or "when" or "in response to determination of" depending on the context thereof.

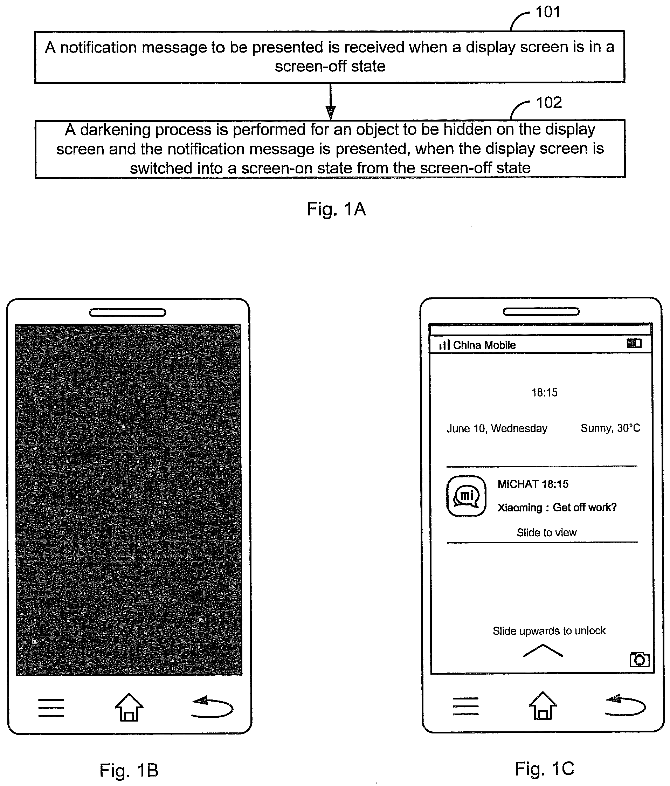

Fig. 1A is a flow chart illustrating a method for displaying information according to an exemplary embodiment. As shown in Fig. 1A, the method is applicable in a terminal and includes following steps.

In step 101, a notification message to be presented is received when a display screen is in a screen-off state.

In step 102, a darkening process is performed for an object to be hidden on the display screen and the notification message is displayed, when the display screen is switched into a screen-on state from the screen-off state.

In an embodiment, the object to be hidden includes a whole or a part of remaining display content displayed on the display screen except the notification message.

In the embodiment of the present invention, the terminal may be a smart terminal, for example, a smart mobile phone, a tablet computer, a PDA (Personal Digital Assistant), an e-book reader, a multimedia player and the like.

In the embodiment provided by the present invention, the screen-off state refers to a state in which the display screen is not electrified and thus is not lighted. In the screen-off state, the terminal is in a locked state and, generally, the smart terminal may be not released from the locked state until receiving an unlock instruction input from a user. When the user clicks on a power button or a home button (the terminal is not unlocked currently), the display screen is electrified and, thus is in a lighted state, while there may be displayed on the display screen predefined objects such as a wallpaper, a weather widget, a time widget, a toolbar widget, an application and the like. Moreover, interface layout and display content of respective object on the display screen, including size and position of characters, display mode and position of respective widget and the like displayed on the display screen, can be set in advance. In an embodiment, date and time may be displayed in a form of year/month/day or day/month/year. Furthermore, display font type and font size for temperature in the weather widget, or display position for weather icons therein, may be set in advance.

In the embodiment provided by the present invention, the notification message to be presented mainly refers to a message received in a screen-off and screen-locked state of the smart terminal. The notification message may be a message generated by an application program installed in the smart terminal, for example, a short message generated by a short message application, an instant communication message generated by an SNS (Social Networking Service) application, an email notification message generated by a mail application, push message generated by other variety of applications, and the like. Such a notification message may be displayed on the display screen in a locked state. In general, a presentation form of the notification message may be set by the user. For example, the display screen may be lighted and whole content of the notification message is displayed therein, or may be lighted while a brief prompt is displayed therein, upon receiving the notification message. The presentation form may also include position, font size, font color or the like of the notification message presented on the display screen.

When the terminal is in the screen-off state, the display screen is not lighted, as shown in Fig. 1B, which is a schematic diagram illustrating the screen-off state of the terminal according to the present invention. When the notification to be displayed is received, the display screen of the terminal is electrified and lighted, such that the notification message is displayed on the display screen, as shown in Fig. 1C, which is a schematic diagram illustrating presentation of the notification message on the display screen of the terminal according to the present invention. As can be seen from Figs. 1B and 1C, the display screen is not lighted in the screen-off state of the terminal, but it is electrified to display the notification message upon receiving the notification message generated by an application in the terminal. There are displayed a toolbar widget, a time widget, a date widget, a weather widget, a MichatTM notification message, and a camera application icon on the display screen of Fig. 1C. As can be seen from Fig. 1C, there are relatively many contents displayed on the display screen, such that the user's attention may be diverted from the notification message due to a relatively weak effect of presentation.

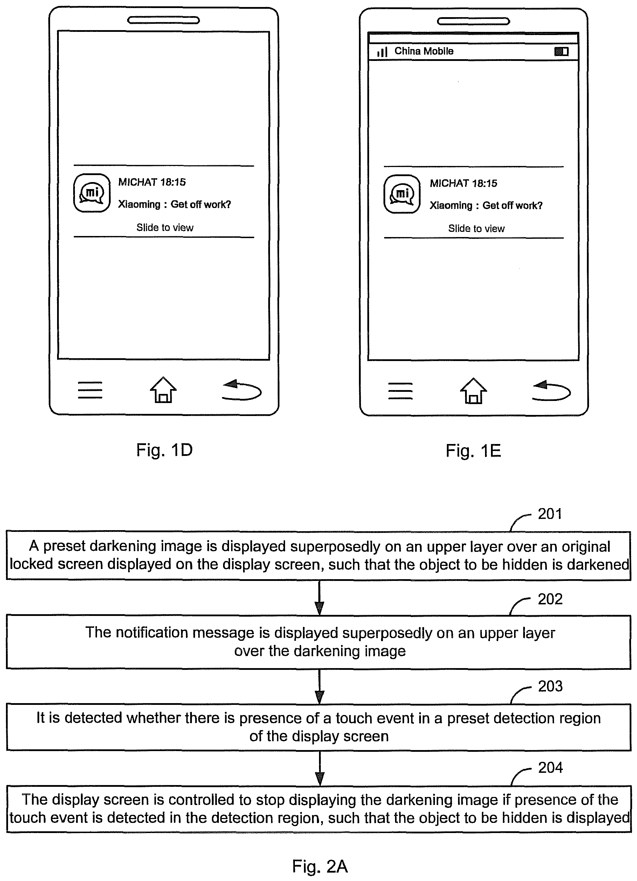

In the present embodiment, however, when a notification message to be presented is received, the display screen is switched into the screen-on state from the screen-off state, a darkening process is performed for an object to be hidden on the display screen before displaying the notification message, wherein the object to be hidden may include a whole or a part of remaining display content displayed on the display screen except the notification message. As shown in Fig. 1D, it is a schematic diagram illustrating presentation of the notification message on the display screen of another terminal according to the present invention. As can be seen from Fig. ID, only the notification message is presented on the display screen in the embodiment of the present invention, such that presented content on the display screen is concise and easy to be read, facilitating the user to focus on the notification message quickly. Thus, better presentation effect of the display screen can be achieved and user experience can be improved.

In the embodiment shown in Fig. 1D, the object to be hidden includes whole of remaining display content displayed on the display screen except the notification message, thus only the notification message is presented on the display screen. In other alternative embodiments, the object to be hidden may also include part of remaining display content displayed on the display screen except the notification message. In other words, content other than the notification message, such as an application icon or a toolbar widget, may be also presented on the display screen.

As shown in Fig. 1E, it is a schematic diagram illustrating display of the notification message on another terminal display screen according to the present invention. As can be seen from Fig. 1E, the notification message and a toolbar widget are presented on the display screen, the object to be hidden includes part of remaining display content displayed on the display screen except the notification message, exclusive of the toolbar widget. Relatively many display contents are removed in the embodiment shown in Fig. 1E compared to that shown in Fig. 1C, such that presented content on the display screen is concise and easy to be read, facilitating the user to focus on the notification message quickly. Thus, better presentation effect of the display screen can be achieved and user experience can be improved.

The object to be hidden as described above can be defined flexibly depending on actual needs in practice rather than being limited by the present invention.

In an embodiment, two modes described as follow can be adopted to perform the darkening process for the object to be hidden on the display screen and to display the notification message when the display screen is switched into the screen-on state from the screen-off state.

### MODE I

The darkening image is displayed superposed on an upper layer over an original locked screen displayed on the display screen, such that the object to be hidden is darkened.

In an embodiment, the original locked screen refers to a display interface preset for the display screen being switched into the screen-on state from the screen-off state. The darkening image is configured to cover the original locked screen entirely or to cover the object to be hidden, and has a transparency lower than a threshold.

In an embodiment, the darkening image should not cover with a transparent effect so as to ensure occlusion thereof, and the preset threshold herein may be 0%.

In view of description for the darkening image above, the notification message can be displayed in two manners accordingly as follows.

In a first manner, the darkening image is configured to cover the original locked screen entirely and the notification message is displayed superposed on the upper layer over the darkening image.

In a second manner, the darkening image is configured to cover the object to be hidden and the notification message is displayed on the display screen.

In the present embodiment, the process manners described above can be implemented in the application layer of an operating system of the terminal and are applicable to a variety of display screens such as an LCD (Liquid Crystal Display).

In the first manner, the original locked screen refers to a display interface preset for the display screen being switched into the screen-on state from the screen-off state. In order to highlight presentation of the notification message, the darkening image can be displayed superposed on the upper layer over the original locked screen and used to darken the object to be hidden. Furthermore, the darkening image may have a transparency lower than a preset threshold and is configured to cover the original locked screen entirely. In practice, the transparency can be flexibly set as required. With a transparency lower than a certain threshold, the darkening image is able to occlude display of the original locked screen, such that the object to be hidden can be darkened. The darkening image may be a dark toned image, a black colored image and the like, which can be selected freely in practice and is not limited by the present invention.

When the original locked screen is entirely covered by the darkening image, the notification message can be further displayed superposed on the upper layer over the darkening image. The notification message may be displayed in form of highlighted mode or displayed with an inverse color of the darkening image. For example, if the darkening image is a green colored image, the notification message may be displayed with red color, such that an effect of highlighted display can be achieved.

In the second manner, the darkening image is configured to cover the object to be hidden. Furthermore, the darkening image may have a transparency lower than a preset threshold so as to occlude display of the object to be hidden, such that the object to be hidden can be darkened. When the object to be hidden is covered by the darkening image, the notification message can be presented on the display screen.

In the embodiment of the present invention, the darkening image is configured to cover the original locked screen entirely or to cover the object to be hidden, and has a transparency lower than the preset threshold. Accordingly, the object to be hidden can be occluded by the darkening image, such that the object to be hidden can be darkened and highlighted presentation of the notification message can be achieved efficiently. Thus, presented content on the display screen is concise and easy to be read, facilitating a user viewing the display screen to focus on the notification message quickly, such that user experience can be improved.

### MODE II

A first group of pixels of the display screen is enabled to be in a power-on state, such that the notification message is displayed, wherein the first group of pixels corresponds to a display region for the notification message.

A second group of pixels of the display screen is disabled to be in a power-off state, such that the object to be hidden is darkened, wherein the second group of pixels corresponds to a display region for the object to be hidden.

In the description, a group of pixels comprises one or several pixels of the display screen.

In the present embodiment, the process mode described above can be implemented in a hardware layer of the operating system of the terminal and is applicable to a variety of display screens such as an OLED (Organic Light-Emitting Diode). In the embodiment, the display region for the notification message, that is, a position of the notification message presented on the display screen, is acquired. The first group of pixels refers to pixels corresponding to the display region, and when the pixels corresponding to the display region are electrified, they are lighted, such that the notification message is presented on the display region. The second group of pixels refers to pixels corresponding to a display region for the object to be hidden and, thus is disabled to be in a power-off state, such that the object to be hidden is darkened.

In the present embodiment, for pixels of the display screen, ones corresponding to the display region for the notification message are enabled to be in the power-on state, while other ones corresponding to the display region for the object to be hidden are disabled to be in the power-off state, so as to display the notification message. Accordingly, highlighted presentation of the notification message can be achieved on the display screen, such that presented content on the display screen is concise and easy to be read, facilitating a user to focus on the notification message quickly, thus better effect of presentation can be achieved on the display screen. Furthermore, power consumption of the terminal can be also reduced since only the first group of pixels is enabled to be in the power-on state while the second group of pixels is disabled to be in the power-off state.

In an optional embodiment, the step of presenting the notification on the display screen may include the following steps.

If a plurality of notification messages is received, a respective presentation form is determined for respective notification message according to a priority of the respective notification message.

In an embodiment, the notification messages having different priorities correspond to different presentation forms or to a same presentation form, and the presentation form includes any one or more of a presented order, a luminance value, a font type, a font size and a color value.

Thereafter, the notification messages are presented on the display screen according to the respective presentation form of the respective notification message.

In the present embodiment, the notification message may be a message generated by an application program installed in the smart terminal, for example, a short message generated by a short message application, an instant communication message generated by an SNS (Social Networking Service) application, an email notification message generated by a mail application, push message generated by other variety of applications, and the like. When a plurality of notification messages is received in the screen-off state of the terminal, they can be displayed with different presentation forms according to a user's interest in different notification messages.

In an embodiment, the priority may be set in advance depending on different applications, or may be set according to various factors such as frequency of use by the user or frequency of receiving the notification message. For example, notification messages from the SNS application may be set with a highest priority, while notification messages from a system-level application such as system update may be set with a lower priority. Alternatively, notification messages generated by a same application can be set with different priorities. For example, there generally may be a plurality of chat friends involved in the SNS application, such that different friends can be set with different priorities. In the embodiment, the priority can be set flexibly according to actual needs and is not limited thereto.

The notification messages having different priorities correspond to a same presentation form or to different presentation forms, and the presentation form includes any one or more of a presented order, a luminance value, a font type, a font size and a color value. For the notification messages to be displayed, they can be presented on the display screen according to the respective presentation form of the respective notification message.

In the present embodiment, the respective presentation form is determined for the respective notification message according to the priority thereof and, where notification messages having different priorities may correspond to different presentation forms or to a same presentation form, thus the notification messages can be displayed with any one or more presentation forms of a presented order, a luminance value, a font type, a font size and a color value. Accordingly, the notification messages can be displayed with diversity of forms, thus user experience can be improved.

Fig. 2A is a flow chart illustrating a method for displaying information according to an exemplary embodiment. As shown in Fig. 2A, the method, which is applicable in the terminal, is described in details, based on the embodiments described previously, on how to perform the darkening process for the object to be hidden on the display screen and display the notification message. The process includes following steps.

In step 201, a preset darkening image is displayed superposed on an upper layer over an original locked screen displayed on the display screen, such that the object to be hidden is darkened.

It should be noted that, an example in which the darkening image is configured to cover the original locked screen entirely is taken for description.

In step 202, the notification message is displayed superposed on an upper layer over the darkening image.

In step 203, it is detected whether there is presence of a touch event in a preset detection region of the display screen.

In an embodiment, the detection region is an arbitrary region of the display screen.

In step 204, the display screen is controlled to stop displaying the darkening image if presence of the touch event is detected in the detection region, such that the object to be hidden is displayed.

It should be further noted that, in view of description on different modes of the darkening image, the notification messages can be displayed in different manners accordingly. Moreover, in view of two presentation modes described above, the first one is taken as an example to describe the implementation manner shown in Fig. 2A. However, when the second presentation mode is performed, only the implementation manner in step 202 is required to be substituted for displaying the notification message on the display screen, while the implementation manner for other steps are the same as that described with Fig. 2A and, thus is not elaborated herein.

The present embodiment can be implemented in the application layer of the operating system of the terminal and is applicable to a variety of display screens such as an LCD (Liquid Crystal Display). In the embodiment, the original locked screen refers to a display interface preset for the display screen being switched into the screen-on state from the screen-off state. In order to highlight presentation of the notification message, the darkening image can be displayed superposed on the upper layer over the original locked screen and used to darken the object to be hidden. Furthermore, the darkening image may have a transparency lower than a preset threshold and be configured to cover the original locked screen entirely. In practice, the transparency can be flexibly set as required. With a transparency lower than a certain threshold, the darkening image is able to occlude display of the original locked screen, such that the object to be hidden can be darkened. The darkening image may be a dark toned image, a black colored image and the like, which can be selected freely in practice and is not limited by the present invention.

When the original locked screen is entirely covered by the darkening image, the notification message can be further displayed superposed on the upper layer over the darkening image. The notification message may be displayed in a highlighted way or displayed with an inverse color of the darkening image. For example, if the darkening image is a green colored image, the notification message may be displayed with red color, such that an effect of highlighted display can be achieved.

In order to control the display screen to stop displaying the darkening image, an instruction may be output from the application layer to the display screen in the hardware layer, such that the display screen can be notified to stop displaying the darkening image. In practice, the darkening image may be displayed superposed on the upper layer over the original locked screen by means of various manners in the application layer. For example, display of the darkening image may be implemented by defining a view object or by defining a window object. Accordingly, in order to control the display screen to remove the darkening image, implementation logic may be adopted where the view is closed or deleted, or the window is closed, such that the display screen is notified to stop displaying the darkening image.

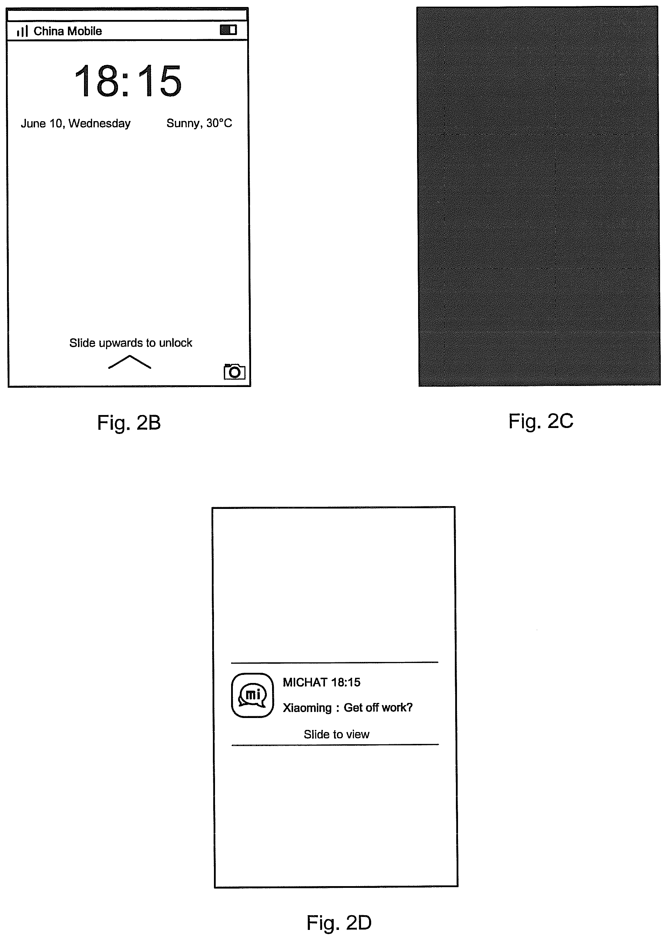

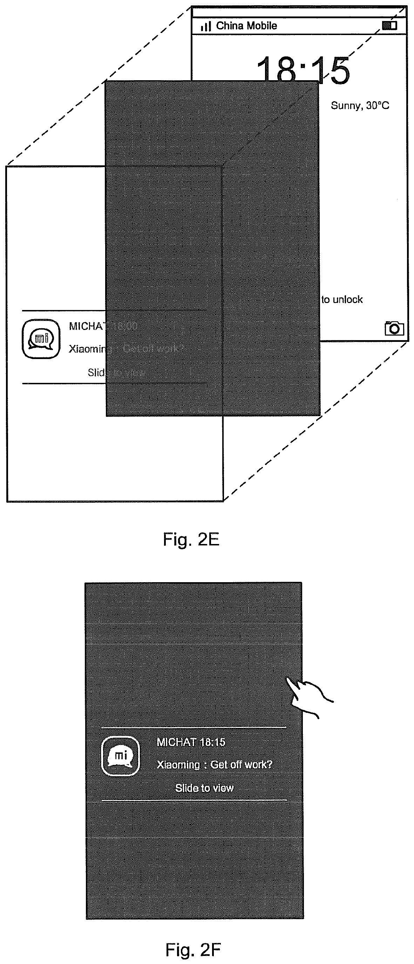

Fig. 2B is a schematic diagram illustrating display of the original locked screen on the display screen according to the present invention. As shown in Fig. 2B, the object to be hidden is displayed on the original locked screen, and a darkening image may be displayed superposed on an upper layer over the original locked screen. Fig. 2C is a schematic diagram illustrating a darkening image according to the present invention. As shown in Fig. 2C, a block colored image with a transparency of 0 (zero) is used as the darkening image so as to darken the object to be hidden, such that the object to be hidden is not visible. Fig. 2D is a schematic diagram illustrating the notification message according to the present invention. Fig. 2E is a schematic diagram illustrating laminated display of the notification message, the darkening image and the original locked screen according to the present invention. As shown in Fig. 2E, the darkening image is displayed superposed on the upper layer over the original locked screen, and then the notification message is displayed superposed on the upper layer over the darkening image, a final effect of display is shown in Fig. 2F, which is a schematic diagram illustrating presentation of the notification message on the display screen according to the present invention. As shown in Fig. 2F, the notification message is displayed with a white colored font, that is, with a display form using an inverse color of the darkening image, such that the notification message can be displayed in a more highlighted way when it is superposed on the upper layer over the darkening image. As can be seen from Fig. 2F, only the notification message is displayed on the terminal display screen according to the present embodiment, while other objects to be hidden, which are irrelevant with the notification message, are darkened. Accordingly, display content on the display screen is more concise, facilitating the user to focus on the notification message quickly, thus better presentation effect of the display screen as well as better user experience can be achieve.

Although only the notification message is displayed on the display screen, the object to be hidden can be displayed for the user's view if it is required to be viewed by the user. To this end, a detection region can be preset on the display screen, which may be an arbitrary region of the display screen, for example, a whole region of the display region, a middle region of the display region or the like. The touch event may be a click event, a double-click event, a slide event or the like. The detection region and the touch event described above may be selected flexibly by those skilled in the art as required and are not limited in the embodiment of the present invention.

If presence of the touch event is detected in the detection region, the display screen is controlled to stop displaying the darkening image such that the object to be hidden can be displayed. For example, as shown in Fig. 2F, where the whole region of the display screen is set as the detection region and the click event is set as the touch event. When the user clicks at an upper right region on the display screen, the display screen is controlled to stop displaying the darkening image. Accordingly, the original locked screen is no longer covered by the darkening image, such that the object to be hidden is visible for the user to quickly view some frequently-used information on the display screen and, thus user experience can be improved.

As can be seen from the embodiment described above, the preset darkening image is displayed superposed on the upper layer over the original locked screen displayed on the display screen according to the embodiment, thus the object to be hidden can be darkened. Moreover, the notification message is displayed superposed on the darkening image, such that the notification message can be presented in a highlighted way with this presentation form. Accordingly, presented content on the display screen is concise and easy to be read, facilitating the user viewing the display screen to focus on the notification message quickly, thus user experience can be improved.

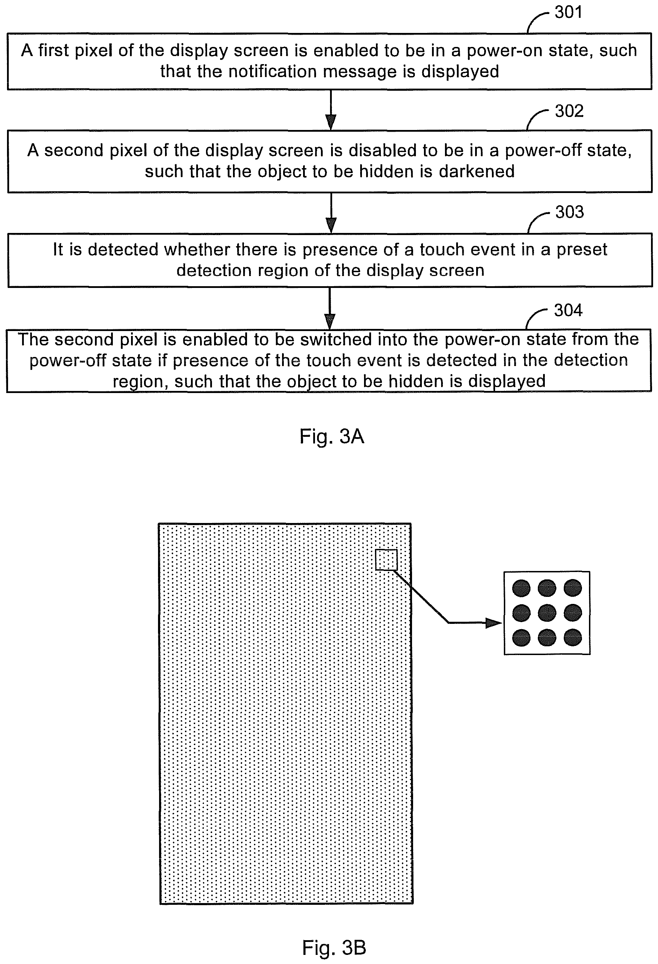

Fig. 3A is a flow chart illustrating another method for displaying information according to an exemplary embodiment. As shown in Fig. 3A, the method, which is applicable in a terminal, is described in details, based on the embodiments described previously, on a process of performing the darkening process for the object to be hidden on the display screen and displaying the notification message when the display screen is switched into the screen-on state from the screen-off state. The process includes following steps.

In step 301, a first group of pixels of the display screen is enabled to be in a power-on state, such that the notification message is displayed.

In the description, a group of pixels comprises one or several pixels of the display screen.

In an embodiment, the first group of pixels corresponds to a display region for the notification message.

In step 302, a second group of pixels of the display screen is disabled to be in a power-off state, such that the object to be hidden is darkened.

In an embodiment, the second group of pixels corresponds to a display region for the object to be hidden.

In step 303, it is detected whether there is presence of a touch event in a preset detection region of the display screen.

In an embodiment, the detection region is an arbitrary region of the display screen.

In step 304, the second group of pixels is enabled to be switched into the power-on state from the power-off state if presence of the touch event is detected in the detection region, such that the object to be hidden is displayed.

In an embodiment, the process described above can be implemented in the hardware layer of the operating system of the terminal and is applicable in variety of display screens such as an OLED. A typical structure of an OLED includes a transparent thin ITO (Indium Tin Oxide) layer having semiconductor properties, which is connected with a positive electrode of the power and then connected with another metallic cathode. The whole of structural layers include therein a hole transport layer, a light emission layer and an electron transport layer. If the electrical power is supplied with a proper voltage, positive holes can be combined with negative charges in the light emission layer to emit light. Three additive primary colors RGB (red, green, blue) are generated with different formulas to constitute basic colors.

In the present embodiment, a display region for the notification message, that is, a presentation location thereof on the display screen, may be acquired. The first group of pixels refers to pixels corresponding to the display region for the notification message, and when the pixels corresponding to the display region for the notification message are electrified, they are lighted, such that the notification message is presented on the display region. The second group of pixels refers to pixels corresponding to a display region for the object to be hidden and, thus is disabled to be in a power-off state, such that the object to be hidden is darkened.

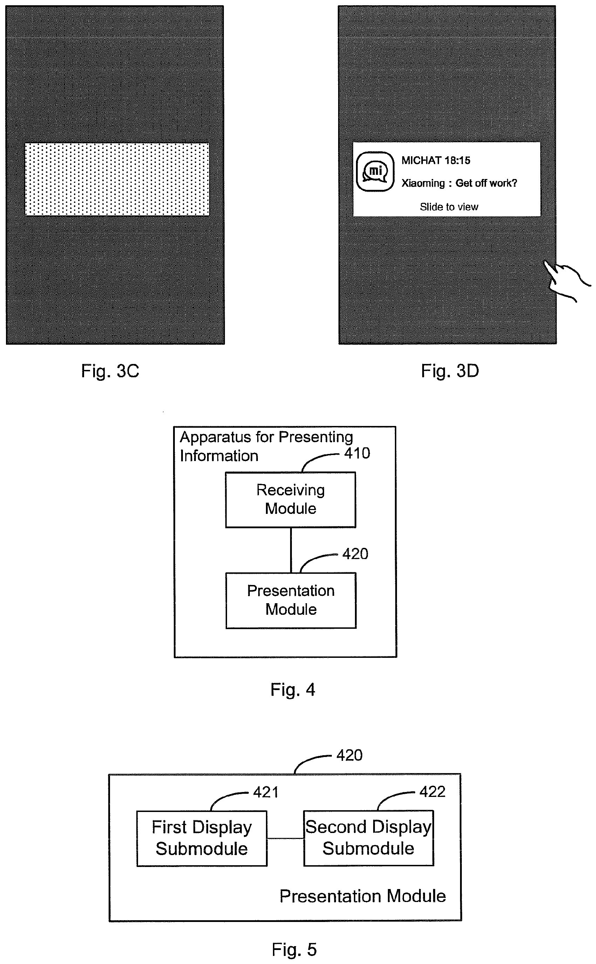

For example, Fig. 3B is a schematic diagram illustrating an OLED display screen with partial enlarged detail according to the present invention. As shown in Fig. 3B, there is a plurality of pixels included in the display screen. If pixels are enabled to be in the power-on state, they are lighted, such that a terminal interface is displayed. If pixels are disabled to be in the power-off state, they are extincted. Fig. 3C is a schematic diagram illustrating a first group of pixels being enabled in a power-on state according to the present invention. As shown in Fig. 3C, depending on a display region for the notification message, pixels corresponding to the display region are electrified, that is, the first group of pixels is in the power-on state, such that the notification message can be presented with a display effect as shown in Fig. 3D, which is a schematic diagram illustrating presentation of the notification message on the display screen according to the present invention.

Although only the notification message is displayed on the display screen, the object to be hidden can be displayed for the user's view if it is required to be viewed by the user. To this end, a detection region can be preset on the display screen, which may be an arbitrary region of the display screen, for example, a whole region of the display region, a middle region of the display region or the like. The touch event may be a click event, a double-click event, a slide event or the like. The detection region and the touch event described above may be selected flexibly by those skilled in the art as required and are not limited in the embodiment of the present invention.

If presence of the touch event is detected in the detection region, the display screen is controlled to stop displaying the darkening image such that the object to be hidden can be displayed. For example, as shown in Fig. 3D, where the whole remaining region except a display region for the notification on the display screen is set as the detection region and the click event is set as the touch event. When the user clicks at a lower right region on the display screen, the second group of pixels is enabled to be switched into the power-on state from the power-off state so as to display the object to be hidden. Accordingly, the object to be hidden is visible for the user to quickly view some frequently-used information on the display screen and, thus user experience can be improved.

As can be seen from the embodiment described above, among pixels of the display screen, ones corresponding to the display region for the notification message is enabled to be in the power-on state while other ones corresponding to the display region for the object to be hidden is disabled to be in the power-off state, so as to display the notification message. Accordingly, the notification message can be presented in a highlighted way on the display screen, such that presented content on the display screen is concise and easy to be read, facilitating the user to focus on the notification message quickly, and a better presentation effect of the display screen can be achieved. Moreover, power consumption of the terminal can be also reduced since only the first group of pixels is enabled to be in the power-on state while the second group of pixels is disabled to be in the power-off state.

Fig. 4 is a block diagram illustrating an apparatus for displaying information according to an exemplary embodiment of the present invention. As shown in Fig. 4, the apparatus includes a receiving module 410 and a display module 420.

In an embodiment, the receiving module 410 is configured to receive a notification message to be presented when a display screen is in a screen-off state.

The display module 420 is configured to perform a darkening process for an object to be hidden on the display screen and to display the notification message received by the receiving module 410, when the display screen is switched into a screen-on state from the screen-off state.

In an embodiment, the object to be hidden includes a whole or a part of remaining display content displayed on the display screen except the notification message.

As can be seen from the embodiment described above, when the notification message to be presented is received in the screen-off state of the display screen, the display screen is switched into the screen-on state to display the notification message, while the whole or part of remaining display content displayed on the display screen except the notification message is darkened. Accordingly, the notification message can be presented in a highlighted way on the display screen in the present invention, such that presented content on the display screen is concise and easy to be read, facilitating a user to focus on the notification message quickly. Thus, better presentation effect of the display screen can be achieved and user experience can be improved.

Fig. 5 is a block diagram illustrating another apparatus for displaying information according to an exemplary embodiment of the present invention. As shown in Fig. 5, according to the embodiment based on that previously described as shown in Fig. 4, the display module 420 includes a first display submodule 421 and a second display submodule 422.

In an embodiment, the first display submodule 421 is configured to display a preset darkening image superposed on an upper layer over an original locked screen displayed on the display screen, such that the object to be hidden is darkened.

In an embodiment, the original locked screen refers to a display interface preset for the display screen being switched into the screen-on state from the screen-off state, the darkening image is configured to cover the original locked screen entirely or configured to cover the object to be hidden, and the darkening image has a transparency lower than a preset threshold.

The second display submodule 422 is configured to display the notification message superposed on an upper layer over the darkening image displayed by the first display submodule 421 if the darkening image is configured to cover the original locked screen entirely.

Alternately, the second display submodule 422 is configured to display the notification message on the display screen if the darkening image is configured to cover the object to be hidden.

It should be noted that, an image configured to cover the original locked screen entirely is taken as an example of the darkening image in the apparatus according to the embodiment illustrated in Fig. 4. In other words, there is a connection depicted between the first display submodule 421 and the second display submodule 422.

As can be seen from the embodiment described above, the darkening image in the present invention is configured to cover the original locked screen entirely or to cover the object to be hidden, and has a transparency lower than the preset threshold. Accordingly, the object to be hidden can be occluded by the darkening image, such that the object to be hidden can be darkened and highlighted presentation of the notification message can be achieved efficiently. Thus, presented content on the display screen is concise and easy to be read, facilitating a user viewing the display screen to focus on the notification message quickly, such that user experience can be improved.

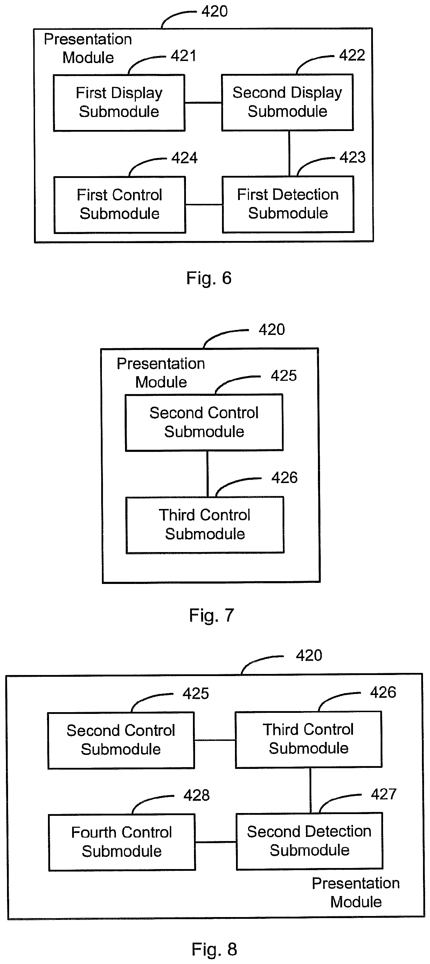

Fig. 6 is a block diagram illustrating another apparatus for displaying information according to an exemplary embodiment of the present invention. As shown in Fig. 6, according to the embodiment based on that previously described as shown in Fig. 4, the display module 420 may further include a first detection submodule 423 and a first control submodule 424.

In an embodiment, the first detection submodule 423 is configured to detect whether there is presence of a touch event in a preset detection region of the display screen.

In an embodiment, the detection region is an arbitrary region of the display screen.

The first control submodule 424 is configured to control the display screen to stop displaying the darkening image if presence of the touch event is detected in the detection region by the first detection submodule 423, such that the original locked screen is displayed.

As can be seen from the embodiment described above, if there is presence of a touch event in the detection region preset on the display screen, the display screen is controlled to stop displaying the darkening image, such that the original locked screen can be displayed. Accordingly, the object to be hidden is no longer in a darkened state, such that additional display content can be displayed on the display screen for a user to quickly view some frequently-used information thereon, thus user experience can be improved.

Fig. 7 is a block diagram illustrating another apparatus for displaying information according to an exemplary embodiment of the present invention. As shown in Fig. 7, according to the embodiment based on that previously described as shown in Fig. 4, the display module 420 may further include a second control submodule 425 and a third control submodule 426.

The second control submodule 425 is configured to enable a first group of pixels of the display screen to be in a power-on state, such that the notification message is displayed.

In an embodiment, the first group of pixels corresponds to a display region for the notification message.

The third control submodule 426 is configured to disable a whole or a part of a second group of pixels of the display screen to be in a power-off state, such that the object to be hidden is darkened.

In an embodiment, the second group of pixels corresponds to a display region for the object to be hidden.

As can be seen from the embodiment described above, among pixels of the display screen, ones corresponding to the display region for the notification message are enabled to be in the power-on state while other ones corresponding to the display region for the object to be hidden are disabled to be in the power-off state, so as to present the notification message. Accordingly, the notification message can be presented in a highlighted way on the display screen, such that presented content on the display screen is concise and easy to be read, facilitating the user to focus on the notification message quickly, and better presentation effect of the display screen can be achieved. Moreover, power consumption of the terminal can be also reduced since only the first group of pixels is enabled to be in the power-on state while the second group of pixels is disabled to be in the power-off state.

Fig. 8 is a block diagram illustrating another apparatus for displaying information according to an exemplary embodiment of the present invention. As shown in Fig. 8, according to the embodiment based on that previously described as shown in Fig. 4, the display module 420 further includes a second detection submodule 427 and a fourth control submodule 428.

The second detection submodule 427 is configured to detect whether there is presence of a touch event in a preset detection region of the display screen.

In an embodiment, the detection region is an arbitrary region of the display screen.

The fourth control submodule 428 is configured to enable the second group of pixels to be switched into the power-on state from the power-off state if presence of the touch event is detected in the detection region by the second detection submodule 427, such that the object to be hidden is displayed.

As can be seen from the embodiment described above, if there is presence of a touch event in the detection region preset on the display screen, the second group of pixels in the power-off state is enabled to be in the power-on state so as to display the object to be hidden. Accordingly, the object to be hidden is no longer in a darkened state, such that additional display content can be displayed on the display screen for a user to quickly view some frequently-used information thereon, thus user experience can be improved.

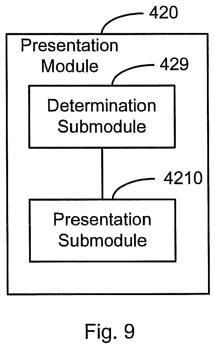

Fig. 9 is a block diagram illustrating another apparatus for displaying information according to an exemplary embodiment of the present invention. As shown in Fig. 9, according to the embodiment based on that previously described as shown in Fig. 4, the display module 420 may further include a determination submodule 429 and a presentation submodule 4210.

The determination submodule 429 is configured to determine a respective presentation form for respective notification message according to a priority of the respective notification message, if a plurality of notification messages is received.

In an embodiment, notification messages having different priorities correspond to different presentation forms or to a same presentation form, and the presentation form includes any one or more of a presented order, a luminance value, a font type, a font size and a color value.

The presentation submodule 4210 is configured to present the notification messages on the display screen according to the respective presentation form of the respective notification message.

As can be seen from the embodiment describe above, according to the present invention, the respective presentation form is determined for the respective notification message according to the priority thereof, where notification messages having different priorities may correspond to different presentation forms or to a same presentation form, thus the notification messages can be displayed with any one or more presentation forms of a presented order, a luminance value, a font type, a font size and a color value. Accordingly, the notification messages can be displayed with diversity of forms, thus user experience can be improved.

Correspondingly, there is also provided by the present invention a device for displaying information. The device includes a processor; and a memory for storing instructions executable by the processor; and wherein the processor is configured to:
receive a notification message to be displayed when a display screen is in a screen-off state; and
perform a darkening process for an object to be hidden on the display screen and display the notification message, when the display screen is switched into a screen-on state from the screen-off state.

In an embodiment, the object to be hidden includes a whole or a part of remaining display content displayed on the display screen except the notification message.

With respect to the apparatuses in the above embodiments, the specific manners for performing operations for individual modules therein have been described in detail in the embodiments regarding the methods, which will not be elaborated herein.

For the embodiments of the apparatus, relevant part may be made reference to descriptions on the embodiments of the method due to their correspondence with each other. The embodiments of the apparatus are described only for purpose of illustration. In an embodiment, those modules described as separate components may be or may be not separated physically; a component illustrated in a unit may be or may be not a physical unit, that is, it may be located at one place or may be distributed over a plurality of network units. A whole of a part of the modules therein can be selected as required to achieve the objects directed to by the present invention, which can be understood and implemented by those skilled in the art without inventive work.

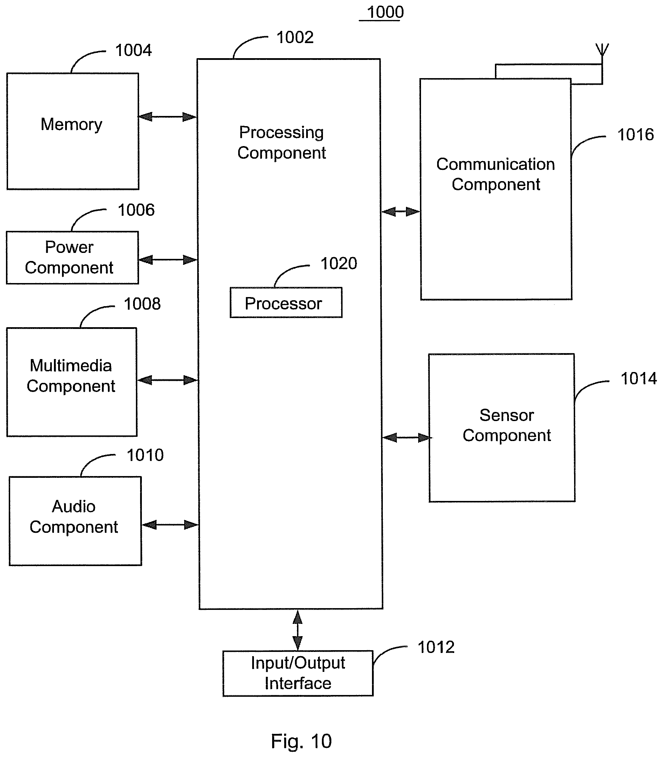

Fig. 10 is a block diagram illustrating a device 1000 for displaying information according to an exemplary embodiment of the present invention. For example, the device 1000 may be a mobile phone, a computer, a digital broadcast terminal, a messaging device, a gaming console, a tablet, a medical device, exercise equipment, a personal digital assistant, and the like.

Referring to Fig. 10, the device 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the device 1000, such as the operations associated with display, telephone calls, data communications, camera operations, and recording operations. The processing component 1002 may include one or more processors 1020 to execute instructions to perform all or part of the steps in the above described methods. Moreover, the processing component 1002 may include one or more modules which facilitate the interaction between the processing component 1002 and other components. For instance, the processing component 1002 may include a multimedia module to facilitate the interaction between the multimedia component 1008 and the processing component 1002.

The memory 1004 is configured to store various types of data to support the operation of the device 1000. Examples of such data include instructions for any applications or methods operated on the device 1000, contact data, phonebook data, messages, pictures, video, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the device 1000. The power component 1006 may include a power management system, one or more power sources, and any other components associated with the generation, management, and distribution of power in the device 1000.

The multimedia component 1008 includes a screen providing an output interface between the device 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1008 includes a front camera and/or a rear camera. The front camera and the rear camera may receive an external multimedia datum while the device 1000 is in an operation mode, such as a photographing mode or a video mode. Each of the front camera and the rear camera may be a fixed optical lens system or have focus and optical zoom capability.

The audio component 1010 is configured to output and/or input audio signals. For example, the audio component 1010 includes a microphone ("MIC") configured to receive an external audio signal when the device 1000 is in an operation mode, such as a call mode, a recording mode, and a voice recognition mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, such as a keyboard, a click wheel, buttons, and the like. The buttons may include, but are not limited to, a home button, a volume button, a starting button, and a locking button.

The sensor component 1014 includes one or more sensors to provide status assessments of various aspects of the device 1000. For instance, the sensor component 1014 may detect an open/closed status of the device 1000, relative positioning of components, e.g., the display and the keypad, of the device 1000, a change in position of the device 1000 or a component of the device 1000, a presence or absence of user contact with the device 1000, an orientation or an acceleration/deceleration of the device 1000, and a change in temperature of the device 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an accelerometer sensor, a gyroscope sensor, a magnetic sensor, a pressure sensor, or a temperature sensor.

The communication component 1016 is configured to facilitate communication, wired or wirelessly, between the device 1000 and other devices. The device 1000 can access a wireless network based on a communication standard, such as WiFi, 2G, or 3G, or a combination thereof. In one exemplary embodiment, the communication component 1016 receives a broadcast signal or broadcast associated information from an external broadcast management system via a broadcast channel. In one exemplary embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 1004, executable by the processor 1020 in the device 1000, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by a processor of a terminal, enables the terminal to perform a method for displaying information. The method include:
receiving a notification message to be presented when a display screen is in a screen-off state; and
performing a darkening process for an object to be hidden on the display screen and displaying the notification message, when the display screen is switched into a screen-on state from the screen-off state.

In an embodiment, the object to be hidden includes a whole or a part of remaining display content displayed on the display screen except the notification message.

## Claims

1. A method for displaying information, **characterized in that** the method comprises:
receiving (101) a notification message to be presented when a display screen is in a screen-off state; and
performing (102) a darkening process for an object to be hidden on the display screen and displaying the notification message, when the display screen is switched into a screen-on state from the screen-off state; wherein the object to be hidden comprises a whole or a part of remaining display content displayed on the display screen except the notification message;
wherein performing a darkening process for an object to be hidden on the display screen and displaying the notification message comprises:
displaying (201) a preset darkening image superposed on an upper layer over an original locked screen displayed on the display screen, such that the object to be hidden is darkened; wherein the original locked screen is a display interface preset for the display screen being switched into the screen-on state from the screen-off state, the darkening image is configured to cover the original locked screen entirely or configured to cover the object to be hidden, and the darkening image has a transparency lower than a preset threshold; and
displaying (202) the notification message superposed on an upper layer over the darkening image if the darkening image is configured to cover the original locked screen entirely, the notification message is displayed in form of highlighted mode or displayed with an inverse color of the darkening image, or
displaying the notification message on the display screen if the darkening image is configured to cover the object to be hidden;
the method further comprising:
detecting (203) whether there is presence of a touch event in a preset detection region of the display screen, wherein the detection region is an arbitrary region of the display screen; and
controlling (204) the display screen to stop displaying the darkening image if presence of the touch event is detected in the detection region, such that the object to be hidden is displayed.

2. The method according to claim 1, wherein displaying the notification message comprises:
determining a respective presentation form for respective notification message according to a priority of the respective notification message, if a plurality of notification messages are received, wherein notification messages having different priorities correspond to different presentation forms or to a same presentation form, and the presentation form comprises any one or more of a presented order, a luminance value, a font type, a font size and a color value; and
displaying the notification messages on the display screen according to the respective presentation form of the respective notification message.

3. An apparatus for displaying information, wherein the apparatus comprises:
a receiving module (410) configured to receive a notification message to be presented when a display screen is in a screen-off state; and
a display module (420) configured to perform a darkening process for an object to be hidden on the display screen and to display the notification message, when the display screen is switched into a screen-on state from the screen-off state; wherein the object to be hidden comprises a whole or a part of remaining display content displayed on the display screen except the notification message;
wherein the display module comprises:
a first display submodule (421) configured to display a preset darkening image superposed on an upper layer over an original locked screen displayed on the display screen, such that the object to be hidden is darkened; wherein the original locked screen is a display interface preset for the display screen being switched into the screen-on state from the screen-off state, the darkening image is configured to cover the original locked screen entirely or configured to cover the object to be hidden, and the darkening image has a transparency lower than a preset threshold; and
a second display submodule (422) configured to display the notification message superposed on an upper layer over the darkening image if the darkening image is configured to cover the original locked screen entirely, the notification message is displayed in form of highlighted mode or displayed with an inverse color of the darkening image, or configured to display the notification message on the display screen if the darkening image is configured to cover the object to be hidden;
wherein the display module further comprises:
a first detection submodule (423) configured to detect whether there is presence of a touch event in a preset detection region of the display screen, wherein the detection region is an arbitrary region of the display screen; and
a first control submodule (424) configured to control the display screen to stop displaying the darkening image if presence of the touch event is detected in the detection region, such that the original locked screen is displayed.

4. The apparatus according to claim 3, **characterized in that**, the display module comprises:
a determination submodule (429) configured to determine a respective presentation form for respective notification message according to priority of the respective notification message, if a plurality of notification messages are received, wherein notification messages having different priorities correspond to different presentation forms or to a same presentation form, and the presentation form comprises any one or more of a presented order, a luminance value, a font type, a font size and a color value; and
a presentation submodule (4210) configured to display the notification messages on the display screen according to the respective presentation form of the respective notification message.

5. A computer program including instructions for executing the steps of a method for displaying information according to any one of claims 1 to 2 when said program is executed by an apparatus according to any one of claims 3 to 4.

6. A recording medium readable by a computer and having recorded thereon a computer program including instructions for executing the steps of a method for displaying information according to any one of claims 1 to 2.

## Patentansprüche

1. Verfahren zur Anzeige von Informationen, **dadurch gekennzeichnet, dass** das Verfahren umfasst:
Empfangen (101) einer Benachrichtigungsmeldung, die präsentiert werden soll, wenn ein Anzeigebildschirm in einem Bildschirm-Aus-Zustand ist, und
Durchführen (102) eines Verdunklungsvorgangs für ein Objekt, das verborgen werden soll, auf dem Anzeigebildschirm und Anzeigen der Benachrichtigungsmeldung, wenn der Anzeigebildschirm aus dem Bildschirm-Aus-Zustand in einen Bildschirm-An-Zustand umgeschaltet wird, wobei das Objekt, das verborgen werden soll, eine Gesamtheit oder einen Teil von restlichem Anzeigeinhalt, der auf dem Anzeigebildschirm angezeigt wird, mit Ausnahme der Benachrichtigungsmeldung umfasst,
wobei das Durchführen eines Verdunklungsvorgangs für ein Objekt, das verborgen werden soll, auf dem Anzeigebildschirm und das Anzeigen der Benachrichtigungsmeldung umfasst:
Anzeigen (201) eines voreingestellten Verdunklungsbilds, eine obere Schicht über einem ursprünglichen gesperrten Bildschirm, der auf dem Anzeigebildschirm angezeigt wird, überlagernd, so dass das Objekt, das verborgen werden soll, verdunkelt wird, wobei der ursprüngliche gesperrte Bildschirm eine Anzeigeschnittstelle ist, die darauf voreingestellt ist, dass der Anzeigebildschirm aus dem Bildschirm-Aus-Zustand in den Bildschirm-An-Zustand umgeschaltet wird, das Verdunklungsbild dazu ausgestaltet ist, den ursprünglichen gesperrten Bildschirm vollständig zu verdecken, oder dazu ausgestaltet ist, das Objekt, das verborgen werden soll, zu verdecken, und das Verdunklungsbild eine Transparenz aufweist, die niedriger als ein voreingestellter Schwellwert ist, und
Anzeigen (202) der Benachrichtigungsmeldung, eine obere Schicht über dem Verdunklungsbild überlagernd, wenn das Verdunklungsbild dazu ausgestaltet ist, den ursprünglichen gesperrten Bildschirm vollständig zu verdecken, wobei die Benachrichtigungsmeldung in Form eines hervorgehobenen Modus angezeigt wird oder mit einer inversen Farbe des Verdunklungsbilds angezeigt wird, oder
Anzeigen der Benachrichtigungsmeldung auf dem Anzeigebildschirm, wenn das Verdunklungsbild dazu ausgestaltet ist, das Objekt, das verborgen werden soll, zu verdecken,
wobei das Verfahren ferner umfasst:
Erfassen (203), ob ein Vorliegen eines Berührungsereignisses in einer voreingestellten Erfassungsregion des Anzeigebildschirms besteht, wobei die Erfassungsregion eine willkürliche Region des Anzeigebildschirms ist, und
Steuern (204) des Anzeigebildschirms, um das Anzeigen des Verdunklungsbilds zu stoppen, wenn ein Vorliegen des Berührungsereignisses in der Erfassungsregion erfasst wird, so dass das Objekt, das verborgen werden soll, angezeigt wird.

2. Verfahren nach Anspruch 1, wobei das Anzeigen der Benachrichtigungsmeldung umfasst:
Bestimmen einer jeweiligen Präsentationsform für eine jeweilige Benachrichtigungsmeldung gemäß einer Priorität der jeweiligen Benachrichtigungsmeldung, wenn mehrere Benachrichtigungsmeldungen empfangen werden, wobei Benachrichtigungsmeldungen, die unterschiedliche Prioritäten aufweisen, unterschiedlichen Präsentationsformen oder derselben Präsentationsform entsprechen, und die Präsentationsform eine beliebige bzw. einen beliebigen oder mehrere beliebige von einer präsentierten Reihenfolge, einem Luminanzwert, einem Zeichensatztyp, einer Zeichensatzgröße und einem Farbwert umfasst, und
Anzeigen der Benachrichtigungsmeldungen auf dem Anzeigebildschirm gemäß der jeweiligen Präsentationsform der jeweiligen Benachrichtigungsmeldung.

3. Vorrichtung zur Anzeige von Informationen, wobei die Vorrichtung umfasst:
ein Empfangsmodul (410), das dazu ausgestaltet ist, eine Benachrichtigungsmeldung zu empfangen, die präsentiert werden soll, wenn ein Anzeigebildschirm in einem Bildschirm-Aus-Zustand ist, und
ein Anzeigemodul (420), das dazu ausgestaltet ist, einen Verdunklungsvorgang für ein Objekt, das verborgen werden soll, auf dem Anzeigebildschirm durchzuführen und die Benachrichtigungsmeldung anzuzeigen, wenn der Anzeigebildschirm aus dem Bildschirm-Aus-Zustand in einen Bildschirm-An-Zustand umgeschaltet wird, wobei das Objekt, das verborgen werden soll, eine Gesamtheit oder einen Teil von restlichem Anzeigeinhalt, der auf dem Anzeigebildschirm angezeigt wird, mit Ausnahme der Benachrichtigungsmeldung, umfasst,
wobei das Anzeigemodul umfasst:
ein erstes Anzeigeteilmodul (421), das dazu ausgestaltet ist, ein voreingestelltes Verdunklungsbild, eine obere Schicht über einem ursprünglichen gesperrten Bildschirm, der auf dem Anzeigebildschirm angezeigt wird, überlagernd, anzuzeigen, so dass das Objekt, das verborgen werden soll, verdunkelt wird, wobei der ursprüngliche gesperrte Bildschirm eine Anzeigeschnittstelle ist, die darauf voreingestellt ist, dass der Anzeigebildschirm aus dem Bildschirm-Aus-Zustand in den Bildschirm-An-Zustand umgeschaltet wird, das Verdunklungsbild dazu ausgestaltet ist, den ursprünglichen gesperrten Bildschirm vollständig zu verdecken, oder dazu ausgestaltet ist, das Objekt, das verborgen werden soll, zu verdecken, und das Verdunklungsbild eine Transparenz aufweist, die niedriger als ein voreingestellter Schwellwert ist, und
ein zweites Anzeigeteilmodul (422), das dazu ausgestaltet ist, die Benachrichtigungsmeldung, eine obere Schicht über dem Verdunklungsbild überlagernd, anzuzeigen, wenn das Verdunklungsbild dazu ausgestaltet ist, den ursprünglichen gesperrten Bildschirm vollständig zu verdecken, wobei die Benachrichtigungsmeldung in Form eines hervorgehobenen Modus angezeigt wird oder mit einer inversen Farbe des Verdunklungsbilds angezeigt wird, oder dazu ausgestaltet ist, die Benachrichtigungsmeldung auf dem Anzeigebildschirm anzuzeigen, wenn das Verdunklungsbild dazu ausgestaltet ist, das Objekt, das verborgen werden soll, zu verdecken,
wobei das Anzeigemodul ferner umfasst:
ein erstes Erfassungsteilmodul (423), das dazu ausgestaltet ist, zu erfassen, ob ein Vorliegen eines Berührungsereignisses in einer voreingestellten Erfassungsregion des Anzeigebildschirms besteht, wobei die Erfassungsregion eine willkürliche Region des Anzeigebildschirms ist, und
ein erstes Steuerungsteilmodul (424), das dazu ausgestaltet ist, den Anzeigebildschirm zu steuern, um das Anzeigen des Verdunklungsbilds zu stoppen, wenn ein Vorliegen des Berührungsereignisses in der Erfassungsregion erfasst wird, so dass der ursprüngliche gesperrte Bildschirm angezeigt wird.

4. Vorrichtung nach Anspruch 3, **dadurch gekennzeichnet, dass** das Anzeigemodul umfasst:
ein Bestimmungsteilmodul (429), das dazu ausgestaltet ist, eine jeweilige Präsentationsform für eine jeweilige Benachrichtigungsmeldung gemäß einer Priorität der jeweiligen Benachrichtigungsmeldung zu bestimmen, wenn mehrere Benachrichtigungsmeldungen empfangen werden, wobei Benachrichtigungsmeldungen, die unterschiedliche Prioritäten aufweisen, unterschiedlichen Präsentationsformen oder derselben Präsentationsform entsprechen, und die Präsentationsform eine beliebige bzw. einen beliebigen oder mehrere beliebige von einer präsentierten Reihenfolge, einem Luminanzwert, einem Zeichensatztyp, einer Zeichensatzgröße und einem Farbwert umfasst, und
ein Präsentationsteilmodul (4210), das dazu ausgestaltet ist, die Benachrichtigungsmeldungen auf dem Anzeigebildschirm gemäß der jeweiligen Präsentationsform der jeweiligen Benachrichtigungsmeldung anzuzeigen.

5. Computerprogramm, beinhaltend Anweisungen zur Ausführung der Schritte eines Verfahrens zur Anzeige von Informationen nach einem der Ansprüche 1 bis 2, wenn das Programm von einer Vorrichtung nach einem der Ansprüche 3 bis 4 ausgeführt wird.

6. Aufzeichnungsmedium, das durch einen Computer lesbar ist und auf dem ein Computerprogramm aufgezeichnet ist, das Anweisungen zur Ausführung der Schritte eines Verfahrens zur Anzeige von Informationen nach einem der Ansprüche 1 bis 2 beinhaltet.

## Revendications

1. Procédé d'affichage d'informations, **caractérisé en ce que** le procédé comprend :
la réception (101) d'un message de notification devant être présenté lorsqu'un écran d'affichage est dans un état d'écran éteint ; et
conduite (102) d'un processus d'obscurcissement pour un objet à masquer sur l'écran d'affichage et d'affichage du message de notification, lorsque l'écran d'affichage est commuté dans un état d'écran allumé depuis l'état d'écran éteint ; dans lequel l'objet à masquer comprend la totalité ou une partie du contenu d'affichage restant affiché sur l'écran d'affichage à l'exception du message de notification ;
dans lequel
la conduite d'un processus d'obscurcissement pour un objet à masquer sur l'écran d'affichage et d'affichage du message de notification comprend :
l'affichage (201) d'une image d'obscurcissement prédéfinie superposée sur une couche supérieure au-dessus d'un écran verrouillé original affiché sur l'écran d'affichage, de sorte que l'objet à masquer est obscurci ; dans lequel l'écran verrouillé original est une interface d'affichage prédéfinie pour l'écran d'affichage étant commuté dans l'état d'écran allumé depuis l'état d'écran éteint, l'image d'obscurcissement est configurée pour recouvrir l'écran verrouillé original entièrement ou configurée pour recouvrir l'objet à masquer, et l'image d'obscurcissement a une transparence inférieure à un seuil prédéfini ; et
l'affichage (202) du message de notification superposé sur une couche supérieure au-dessus de l'image d'obscurcissement si l'image d'obscurcissement est configurée pour recouvrir l'écran verrouillé original entièrement, le message de notification est affiché sous la forme d'un en surbrillance ou affiché avec une couleur inverse de l'image d'obscurcissement, ou
l'affichage du message de notification sur l'écran d'affichage si l'image d'obscurcissement est configurée pour recouvrir l'objet à masquer ;
le procédé comprenant en outre :
la détection (203) de la présence d'un événement tactile dans une région de détection prédéfinie de l'écran d'affichage, dans lequel la région de détection est une région arbitraire de l'écran d'affichage ; et
la commande (204) de l'écran d'affichage pour arrêter d'afficher l'image d'obscurcissement si la présence de l'événement tactile est détectée dans la région de détection, de sorte que l'objet à masquer est affiché.

2. Procédé selon la revendication 1, dans lequel l'affichage du message de notification comprend :
la détermination d'un formulaire de présentation respectif pour le message de notification respectif selon une priorité du message de notification respectif, si une pluralité de messages de notification sont reçus, dans lequel des messages de notification ayant différentes priorités correspondent à différents formulaires de présentation ou au même formulaire de présentation, et le formulaire de présentation comprend l'un ou plusieurs quelconques parmi un ordre de présentation, une valeur de luminance, un type de police, une taille de police et une valeur de couleur ; et
l'affichage des messages de notification sur l'écran d'affichage conformément au formulaire de présentation respectif du message de notification respectif.

3. Appareil d'affichage d'informations, l'appareil comprenant :
un module de réception (410) configuré pour recevoir un message de notification devant être présenté lorsqu'un écran d'affichage est dans un état d'écran éteint ; et
un module d'affichage (420) configuré pour effectuer un processus d'obscurcissement pour un objet à masquer sur l'écran d'affichage et pour afficher le message de notification, lorsque l'écran d'affichage est commuté dans un état d'écran allumé depuis l'état d'écran éteint ; dans lequel l'objet à masquer comprend la totalité ou une partie du contenu d'affichage restant affiché sur l'écran d'affichage à l'exception du message de notification ;
dans lequel le module d'affichage comprend :
un premier sous-module d'affichage (421) configuré pour afficher une image d'obscurcissement prédéfinie superposée sur une couche supérieure au-dessus d'un écran verrouillé original affiché sur l'écran d'affichage, de sorte que l'objet à masquer est obscurci ; dans lequel l'écran verrouillé original est une interface d'affichage prédéfinie pour l'écran d'affichage étant commuté dans l'état d'écran allumé depuis l'état d'écran éteint, l'image d'obscurcissement est configurée pour recouvrir l'écran verrouillé original entièrement ou configurée pour recouvrir l'objet à masquer, et l'image d'obscurcissement a une transparence inférieure à un seuil prédéfini ; et
un deuxième sous-module d'affichage (422) configuré pour afficher le message de notification superposé sur une couche supérieure au-dessus de l'image d'obscurcissement si l'image d'obscurcissement est configurée pour recouvrir l'écran verrouillé original entièrement, le message de notification est affiché sous la forme d'un mode en surbrillance ou affichée avec une couleur inverse de l'image d'obscurcissement, ou configurée pour afficher le message de notification sur l'écran d'affichage si l'image d'obscurcissement est configurée pour recouvrir l'objet à masquer ;
dans lequel le module d'affichage comprend en outre :
un premier sous-module de détection (423) configuré pour détecter la présence d'un événement tactile dans une région de détection prédéfinie de l'écran d'affichage, dans lequel la région de détection est une région arbitraire de l'écran d'affichage ; et
un premier sous-module de commande (424) configuré pour commander l'écran d'affichage pour arrêter d'afficher l'image d'obscurcissement si la présence de l'événement tactile est détectée dans la région de détection, de sorte que l'écran verrouillé original est affiché.

4. Appareil selon la revendication 3, **caractérisé en ce que** le module d'affichage comprend :
un sous-module de détermination (429) configuré pour déterminer un formulaire de présentation respectif pour un message de notification respectif conformément à la priorité du message de notification respectif, si une pluralité de messages de notification sont reçus, dans lequel des messages de notification ayant différentes priorités correspondent à différents formulaires de présentation ou au même formulaire de présentation, et le formulaire de présentation comprend l'un ou plusieurs quelconques parmi un ordre de présentation, une valeur de luminance, un type de police, une taille de police et une valeur de couleur ; et
un sous-module de présentation (4210) configuré pour afficher les messages de notification sur l'écran d'affichage conformément au formulaire de présentation respectif du message de notification respectif.

5. Programme informatique comprenant des instructions pour exécuter les étapes d'un procédé pour afficher des informations selon l'une quelconque des revendications 1 à 2 lorsque ledit programme est exécuté par un appareil selon l'une quelconque des revendications 3 à 4.

6. Support d'enregistrement lisible par un ordinateur et sur lequel un programme informatique est enregistré comprenant des instructions pour exécuter les étapes d'un procédé pour afficher des informations selon l'une quelconque des revendications 1 à 2.
